# EUROPEAN PATENT APPLICATION

(11) **EP 4 397 527 A1**
(43) Date of publication of application: **10.07.2024**
(21) Application number: 22863527.2
(22) Date of filing: 31.08.2022
(51) Int. Cl.: B60L 50/62, B60L 15/20, B60W 20/00, B60W 10/08

(54) **METHOD AND APPARATUS FOR CONTROLLING GENERATING POWER OF RANGE EXTENDER, MEDIUM, AND VEHICLE**

(30) Priority: 01.09.2021 CN 202111022541
(71) Applicant: Beijing CHJ Information Technology Co., Ltd., Beijing 101399 (CN)
(72) Inventor: MA, Xiao, Beijing 101399 (CN)
(74) Representative: advotec.
(86) International application number: PCT/CN2022/116233
(87) International publication number: WO 2023/030392

(57) **Abstract**

A method and apparatus for controlling generating power of a range extender, a medium, and a vehicle. The method comprises: calculating actual generating power of a range extender according to a detected current and voltage of a power generating device and an electric device (S101); determining an offset for the actual generating power relative to a required generating power of the range extender (S102); and correcting an operating point of the range extender according to the offset, so that the offset is within a predetermined range (S103).

## Description

### CROSS REFERENCE TO RELATED APPLICATIONS

This application is based on and claims priority to Chinese patent application No. 202111022541.0, filed on September 01, 2021, the entire contents of which are incorporated herein by reference.

### TECHNICAL FIELD

The disclosure relates to a technical field of electric vehicle automatic control, in particular to a method for controlling a generation power of a range extender, an apparatus for controlling a generation power of a range extender, a medium and a vehicle.

### BACKGROUND

A range-extended electric vehicle is a vehicle that uses other energy sources (such as gasoline) to replenish electrical energy when its battery power is insufficient. A main operation characteristic of the electric vehicle is that it can be operated in a pure electric mode or in a range extending mode. Electrical energy generated by the range extender may drive a motor and charge a power battery.

In the range extending mode in the related art, an actual generation power of the range extender is calculated through a torque of an engine. A response speed and accuracy of the torque of the engine determines the actual generation power of the range extender. However, there is a certain error in an actual feedback torque of the engine, especially in low-temperature environment or when the engine is not fully warmed up, which may cause overcharging or over-discharging.

### SUMMARY

An object of this disclosure is to provide an accurate and efficient method for controlling a generation power of a range extender, an apparatus for controlling a generation power of a range extender, a medium and a vehicle.

In order to achieve the above object, the disclosure provides a method for controlling a generation power of a range extender. The method includes:
calculating an actual generation power of the range extender according to detected currents and voltages of a power-generating device and a power-consuming device;
determining an offset between the actual generation power and a demand generation power of the range extender; and
adjusting an operating point of the range extender according to the offset, to make the offset within a preset range.

In some embodiments, the power-generating device includes the range extender, the range extender includes a generator, and calculating the actual generation power of the range extender according to the detected currents and voltages of the power-generating device and the power-consuming device includes:
detecting a bus voltage and a bus current of the generator, and calculating an actual generation power of the generator according to the bus voltage and the bus current of the generator.

In some embodiments, the power-consuming device includes a driving motor, a power battery is either the power-generating device or the power-consuming device, and calculating the actual generation power of the range extender according to the detected currents and voltages of the power-generating device and the power-consuming device includes:
detecting a bus voltage and a bus current of the driving motor, and calculating an actual power of the driving motor according to the bus voltage and the bus current of the driving motor;
detecting a bus voltage and a bus current of the power battery, and calculating an actual power of the power battery according to the bus voltage and the bus current of the power battery; and
determining the actual generation power of the range extender according to the actual power of the driving motor and the actual power of the power battery.

In some embodiments, the range extender includes a generator and an engine, and adjusting the operating point of the range extender according to the offset to make the offset within the preset range includes:
in response to the offset being positive, decreasing a target rotational speed of the generator and/or a target torque of the engine; and in response to the offset being negative, increasing the target rotational speed of the generator and/or the target torque of the engine, to make the offset within the preset range.

In some embodiments, before calculating the actual generation power of the range extender according to the detected currents and voltages of the power-generating device and the power-consuming device, the method further includes:
determining the demand generation power of the range extender;
determining a target operating point of the range extender according to the demand generation power; and
controlling the range extender to reach the target operating point.

In some embodiments, determining the demand generation power of the range extender includes:
determining a generation power of the range extender corresponding to a current opening degree of an accelerator pedal and a current vehicle speed in a preset first correspondence as a basic generation power, in which the first correspondence is a relation between opening degrees of the accelerator pedal, vehicle speeds, and generation powers of the range extender; and
obtaining the demand generation power of the range extender by adjusting the basic generation power according to a demand power for whole-vehicle consumption and a state of charge (SOC) of a power battery.

In some embodiments, obtaining the demand generation power of the range extender by adjusting the basic generation power according to the demand power for the whole-vehicle consumption and the SOC of the power battery includes:
in response to the demand power for the whole-vehicle consumption being greater than a preset power threshold, obtaining an intermediate power by adding a preset first increment to the basic generation power; and
in response to the SOC of the power battery being less than a preset SOC threshold, obtaining the demand generation power of the range extender by adding a preset second increment to the intermediate power.

In some embodiments, the range extender includes a generator and an engine, and determining the target operating point of the range extender according to the demand generation power includes:
determining a rotational speed of the engine corresponding to a current vehicle speed and the demand generation power in a preset second correspondence as a target rotational speed of the engine, in which the second correspondence is a relation between vehicle speeds, generation powers of the range extender, and rotational speeds of the engine; and
calculating a target torque of the engine according to the target rotational speed of the engine and the demand generation power.

In some embodiments, controlling the range extender to reach the target operating point includes:
determining a target rotational speed of the generator according to the target rotational speed of the engine;
controlling the generator to operate according to the target rotational speed of the generator and controlling the engine to operate according to the target torque of the engine; and
in response to an absolute value of a difference between an actual rotational speed of the generator and the target rotational speed of the generator being less than a preset rotational speed threshold, and an absolute value of a difference between an actual torque of the engine and the target torque of the engine being less than a preset torque threshold, determining that the range extender reaches the target operating point.

The disclosure also provides an apparatus for controlling a generation power of a range extender. The apparatus includes:
a calculating module, configured to calculate an actual generation power of the range extender according to detected currents and voltages of a power-generating device and a power-consuming device;
a determining module, configured to determine an offset between the actual generation power and a demand generation power of the range extender; and
an adjusting module, configured to adjust an operating point of the range extender according to the offset, to make the offset within a preset range.

In some embodiments, the apparatus further includes: a controlling module, configured to: determine the demand generation power of the range extender; determine a target operating point of the range extender according to the demand generation power; and control the range extender to reach the target operating point.

The disclosure also provides a non-transitory computer-readable storage medium having a computer program stored thereon. When the computer program is executed by a processor, the steps of the above method provided by the disclosure are implemented.

The disclosure also provides a vehicle, including:
a memory having a computer program stored thereon; and
a processor for executing the computer program in the memory to implement the steps of the above method provided by the disclosure.

The disclosure also provides a computer program product including a computer program. When the computer program is executed by a processor, the steps of the method provided by the disclosure are implemented.

Through the above technical solutions, the actual generation power of the range extender is calculated according to the detected currents and voltages of the power-generating device and the power-consuming device. The operating point of the range extender is adjusted, so that the offset between the actual generation power and the demand generation power of the range extender is within the preset range. Since the actual generation power of the range extender is not calculated using the torque of the engine, overcharging or over-discharging of the power battery due to inaccurate torque of the engine can be avoided.

Additional features and advantages of the disclosure will be described in detail in the following section of detailed description.

### BRIEF DESCRIPTION OF THE DRAWINGS

The accompanying drawings are used to provide a further understanding of the disclosure and constitute a part of the specification, and they are used to explain the disclosure in combination with the following specific implementations, but do not constitute a limitation of the disclosure, in which:
FIG. 1 is a flowchart of a method for controlling a generation power of a range extender provided by an embodiment of the disclosure.
FIG. 2 is a block diagram of an apparatus for controlling a generation power of a range extender provided by an embodiment of the disclosure.
FIG. 3 is a block diagram of a vehicle according to an embodiment of the disclosure.

### DETAILED DESCRIPTION

Specific implementations of the disclosure are described in detail below with reference to the accompanying drawings. It should be understood that the specific implementations described herein are intended only to illustrate and explain the disclosure and are not intended to limit the disclosure.

A range extender in a range-extended electric vehicle includes an engine and a generator. The engine may provide power for starting the vehicle. The generator converts mechanical energy into electrical energy and provides the electrical energy to a driving motor. The driving motor is configured to output power to wheels. The driving motor can be powered by the range extender and/or a power battery. When the vehicle is running, the power battery can output power to the driving motor for discharging, or it can receive power from the generator for recharging.

Generally, an actual generation power of the range extender is calculated by a torque of the engine. If there is a large error in torque calculation of the engine, overcharging may occur when the range extender charges the power battery, and over-discharging may occur when the range extender and the power battery together provide power to the driving motor.

In view of this, the disclosure provides a method for controlling a generation power of a range extender. The actual generation power of the range extender is calculated according to currents and voltages of a power-generating device and a power-consuming device in the vehicle. An operating point of the range extender is modified. The actual generation power of the range extender is no longer calculated according to the torque of the engine, thus overcharging or over-discharging of the power battery due to inaccurate torque of the engine can be avoided.

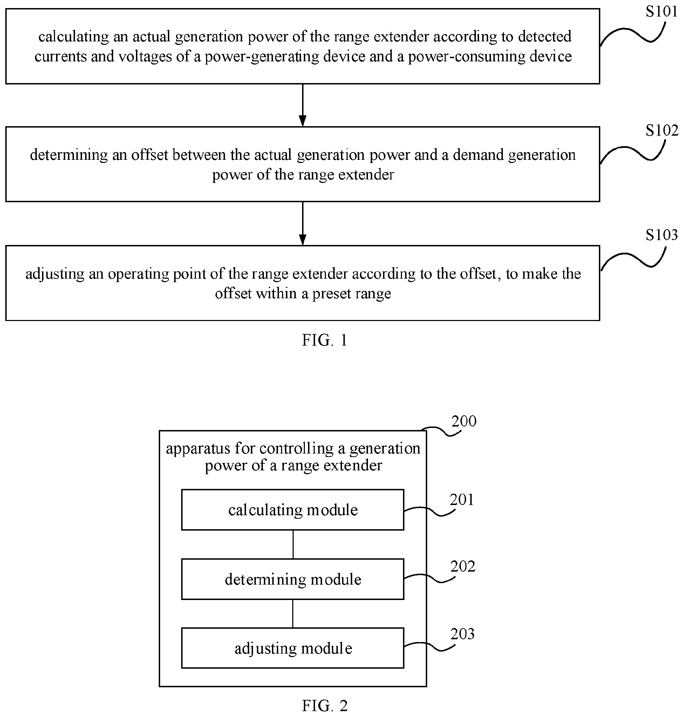

FIG. 1 is a flowchart of a method for controlling a generation power of a range extender provided by an embodiment of the disclosure. As illustrated in FIG. 1, the method includes the following steps.

At step S101, an actual generation power of the range extender is calculated according to detected currents and voltages of a power-generating device and a power-consuming device.

At step S 102, an offset between the actual generation power and a demand generation power of the range extender is determined.

At step S103, an operating point of the range extender is adjusted according to the offset, to make the offset within a preset range.

The power-generating device in a vehicle may include a range extender and a power battery, and the power-consuming device may include a driving motor and the power battery. That is, the power battery can be either the power-generating device or the power-consuming device. The operating point of the range extender can include a rotational speed of the generator, a rotational speed of an engine, and a torque of the engine. The operating point of the range extender can be jointly determined according to a driving demand of the vehicle and an operating requirement of a high-voltage accessory.

In a process of adjustment, a closed-loop control method can be used. For example, after execution of a control instruction is completed, the actual generation power of the range extender is compared with the demand generation power of the range extender to obtain the offset, and a target operating point of the range extender in a next step is adjusted according to the offset, to finally reach a control object. The preset range can be obtained based on experiment or experience. If the offset is within the preset range, it can be determined that the actual generation power of the range extender is approximately equal to the demand generation power of the range extender, and thus the control object is achieved.

In the related art, the actual generation power of the range extender is estimated according to a feedback torque of the engine, and the operating point of the range extender can be controlled in a closed-loop manner. However, if the feedback torque of the engine is inaccurate, it may be unable to precisely control the operating point of the range extender, and the power battery may be overcharged or over-discharged.

In the embodiment of the disclosure, the actual generation power of the range extender is calculated according to the detected currents and voltages of the power-generating device and the power-consuming device. The actual generation power of the range extender is estimated using the relation between the current, voltage and power, and a power relation between the power-generating device and the power-consuming device in each state.

Through the above technical solutions, the actual generation power of the range extender is calculated according to the currents and voltages of the power-generating device and the power-consuming device. The operating point of the range extender is adjusted, so that the offset between the actual generation power and the demand generation power of the range extender is within the preset range. Since the actual generation power of the range extender is not calculated using the torque of the engine, overcharging or over-discharging of the power battery due to inaccurate torque of the engine can be avoided.

In some embodiments, on the basis of FIG. 1, calculating the actual generation power of the range extender according to the detected currents and voltages of the power-generating device and the power-consuming device may include: detecting a bus voltage and a bus current of a generator, and calculating an actual generation power of the generator according to the bus voltage and the bus current of the generator.

The bus voltage and the bus current of the generator can be detected simply by setting up a voltage sensor and a current sensor. The actual generation power of the generator can be calculated by multiplying the bus voltage with the bus current. This direct calculation method is accurate and highly reliable.

In some embodiments, on the basis of FIG. 1, calculating the actual generation power of the range extender according to the detected currents and voltages of the power-generating device and the power-consuming device may include:
1) detecting a bus voltage and a bus current of a driving motor, and calculating an actual power of the driving motor according to the bus voltage and the bus current of the driving motor. The bus voltage and the bus current of the driving motor can be detected simply by setting up a voltage sensor and a current sensor, and the actual power of the driving motor can be calculated by multiplying the bus voltage with the bus current;
2) detecting a bus voltage and a bus current of a power battery, and calculating an actual power of the power battery according to the bus voltage and the bus current of the power battery. The bus voltage and the bus current of the power battery can be detected simply by setting up a voltage sensor and a current sensor, and the actual power of the power battery can be calculated by multiplying the bus voltage with the bus current; and
3) determining the actual generation power of the range extender according to the actual power of the driving motor and the actual power of the power battery.

If the power battery (i.e., the power battery acting as a power-generating device) and the generator together provide power to the driving motor, a sum of powers of the power battery and the generator is the power of the driving motor. The actual generation power of the range extender can be obtained by subtracting the actual power of the power battery from the actual power of the driving motor.

If the generator provides power to both the power battery (i.e., the power battery acting as a power-consuming device) and the driving motor, a sum of powers of the power battery and the driving motor is the power of the generator. The actual generation power of the range extender can be obtained by adding the actual power of the driving motor and the actual power of the power battery together.

If the vehicle is not running now, and the generator only charges the power battery (i.e., the power battery acting as a power-consuming device), the power of the generator is equal to the power of the power battery.

In the embodiment of the disclosure, another way to calculate the actual generation power of the range extender is provided by calculating the actual generation power of the range extender through detecting the bus voltages and bus currents of the driving motor and the power battery.

In some embodiments, adjusting the operating point of the range extender according to the offset to make the offset within the preset range may include: in response to the offset being positive, decreasing a target rotational speed of the generator and/or a target torque of an engine; and in response to the offset being negative, increasing the target rotational speed of the generator and/or the target torque of the engine, to make the offset within the preset range.

The offset may refer to a value obtained by subtracting the demand generation power of the range extender from the actual generation power of the range extender. If the offset is positive, it means that the actual generation power of the range extender is greater than the demand generation power of the range extender, thus the target rotational speed of the generator and/or the target torque of the engine can be decreased, to reduce the actual generation power of the range extender. If the offset is negative, it means that the actual generation power of the range extender is less than the demand generation power of the range extender, thus the target rotational speed of the generator and/or the target torque of the engine can be increased, to increase the actual generation power of the range extender.

If the offset is within the preset range, the actual generation power of the range extender is considered to be approximately equal to the demand generation power of the range extender, and no further adjustment is required.

In the embodiment of the disclosure, the target rotational speed of the generator and/or the target torque of the engine is increased or decreased based on the offset of the actual generation power of the range extender relative to the demand generation power of the range extender, to achieve the purpose of adjusting the target operating point of the range extender, with high closed-loop control efficiency.

In some embodiments, on the basis of FIG. 1, before calculating the actual generation power of the range extender according to the detected currents and voltages of the power-generating device and the power-consuming device, the method may further include: determining the demand generation power of the range extender; determining the operating point of the range extender according to the demand generation power; and controlling the range extender to reach the determined operating point.

The demand generation power of the range extender can be used for vehicle driving, a high-voltage accessory (e.g., an air conditioner and a Positive Temperature Coefficient (PTC) heater), power battery charging, and the like. A demand power for the whole-vehicle consumption may include a demand power for vehicle driving and a demand power for the high-voltage accessory, which may be determined according to the methods in the related art. The demand generation power of the range extender can be y determined based on a state of controlling a driving component (e.g., an accelerator pedal, a gear box, etc.) by the driver and an operating state of the high-voltage accessory such as an air conditioner, and then the operating point of the range extender can be determined. For example, a correspondence between demand generation powers of the range extender and operating points of the range extender can be determined and stored in advance, so that after the demand generation power of the range extender is determined, a corresponding operating point of the range extender can be determined through the correspondence.

In the embodiment of the disclosure, the target operating point of the range extender is determined according to the demand generation power of the range extender, so that the determined operating point may be accurate and may fit an actual demand.

In some embodiments, determining the demand generation power of the range extender may include the following steps.

A generation power of the range extender corresponding to a current opening degree of an accelerator pedal and a current vehicle speed is determined in a preset first correspondence as a basic generation power, in which the first correspondence is a relation between opening degrees of the accelerator pedal, vehicle speeds, and generation powers of the range extender. The demand generation power of the range extender is obtained by adjusting the basic generation power according to a demand power for whole-vehicle consumption and a SOC of a power battery.

In some embodiments, this first correspondence may be pre-calibrated and stored by way of experimentation. After obtaining the current opening degree of the accelerator pedal and the current vehicle speed, the generation power corresponding to the current opening degree of the accelerator pedal and the current vehicle speed is determined according to the first correspondence. The demand generation power of the range extender is obtained by adjusting the determined generation power according to the demand power for the whole-vehicle consumption and the SOC of the power battery.

In detail, obtaining the demand generation power of the range extender by adjusting the basic generation power according to the demand power for the whole-vehicle consumption and the SOC of the power battery includes the following steps.

In response to the demand power for the whole-vehicle consumption being greater than a preset power threshold, an intermediate power is obtained by adding a preset first increment to the basic generation power. In response to the SOC of the power battery being less than a preset SOC threshold, the demand generation power of the range extender is obtained by adding a preset second increment to the intermediate power.

The demand generation power of the range extender can be a sum of the basic generation power, the first increment and the second increment. The first increment can be understood as a redundancy corresponding to the demand power for the whole-vehicle consumption, and the second increment can be understood as a redundancy corresponding to the SOC of the battery. If the demand power for the whole-vehicle consumption is relatively large (greater than the preset power threshold), the demand generation power of the range extender requires more redundancy, and the first increment can be added to the basic generation power. If the SOC of the battery is relatively small (less than the preset SOC threshold), the demand generation power of the range extender requires more redundancy and the second increment can be added to the intermediate power.

For example, the basic generation power is determined to be 3000W. If the obtained demand power for the whole-vehicle consumption is 2800W, which is greater than the power threshold of 2600W, the preset first increment of 200 W is added to the basic generation power of 3000W, and the intermediate power of 3200W is obtained. If the obtained SOC of the power battery is 20%, which is less than the SOC threshold of 30%, the preset second increment of 200W is added to the intermediate power of 3200W, and the intermediate power of 3400W is obtained.

If the demand power for the whole-vehicle consumption is 2500W, which is less than the power threshold, the preset first increment is not added, and the basic generation power of 3000W is used as the intermediate power. If the SOC of the power battery is 60%, which is greater than the charge threshold of 30%, the preset second increment is not added, the demand generation power of the range extender is the basic generation power of 3000W.

In conclusion, the demand generation power of the range extender may be a sum of the basic generation power and a total increment. The total increment includes the first increment corresponding to the demand power for the whole-vehicle consumption and the second increment corresponding to the SOC of the power battery. The total increment may be considered as a generation power additionally add for some redundancy and for charging the power battery.

In the embodiment of the disclosure, the demand generation power of the range extender is determined according to the basic generation power and the total increment, and the demand generation power is determined more comprehensively.

In some embodiments, determining the operating point of the range extender according to the demand generation power may include: determining a rotational speed of the engine corresponding to a current vehicle speed and the demand generation power in a preset second correspondence as a target rotational speed of the engine, in which the second correspondence is a relation between vehicle speeds, generation powers of the range extender, and rotational speeds of the engine; and calculating a target torque of the engine according to the target rotational speed of the engine and the demand generation power.

In some embodiments, the second correspondence may be pre-calibrated and stored by way of experimentation. After obtaining the demand generation power and the current vehicle speed, the rotational speed of the engine corresponding to the demand generation power and the current vehicle speed is determined as the target rotational speed of the engine according to the second correspondence.

After the target rotational speed of the engine is determined, the target torque of the engine can be obtained by calculating through an equation T=9550P*n0, in which P is the demand generation power of the range extender, n0 is the target rotational speed of the engine, and T is the target torque of the engine.

In the embodiment of the disclosure, the target torque of the engine is determined through the preset correspondence and the equation calculation method, which is a simple method with a fast processing speed and is capable of obtaining an accurate result.

In some embodiments, controlling the range extender to reach the determined operating point may include: determining a target rotational speed of the generator according to the target rotational speed of the engine; controlling the generator to operate according to the target rotational speed of the generator and controlling the engine to operate according to the target torque of the engine; and in response to an absolute value of a difference between an actual rotational speed of the generator and the target rotational speed of the generator being less than a preset rotational speed threshold, and an absolute value of a difference between an actual torque of the engine and the target torque of the engine being less than a preset torque threshold, determining that the range extender reaches the target operating point.

In some embodiments, the rotational speed of the generator corresponding to the target rotational speed of the engine may be calculated according to a speed ratio of the engine to the generator, and determined as the target rotational speed of the generator.

The generator is instructed to operate according to the target rotational speed of the generator, and the engine is instructed to operate according to the target torque of the engine. That is, the range extender is instructed to operate according to the target operating point.

After the engine receives a control instruction, the torque of the engine approaches the target torque. After the generator receives a control instruction, a rotational speed of the generator approaches the target rotational speed.

If the absolute value of the difference between the actual rotational speed of the generator and the target rotational speed of the generator is less than the preset rotational speed threshold, it can be determined that the actual rotational speed of the generator basically reaches the target rotational speed. If the absolute value of the difference between the actual torque of the engine and the target torque of the engine is less than the preset torque threshold, it can be determined that the actual torque of the engine basically reaches the target torque. If these two conditions are satisfied, the range extender is considered to reaches the target operating point. If the range extender reaches the determined operating point, the closed-loop control of the generation power of the range extender can be performed.

In the embodiment of the disclosure, determining whether the range extender reaches the determined operating point by the method described above has high accuracy.

On the contrary, if the absolute value of the difference between the actual rotational speed of the generator and the target rotational speed of the generator is greater than or equal to the preset rotational speed threshold, or the absolute value of the difference between the actual torque of the engine and the target torque of the engine is greater than or equal to the preset torque threshold, it is determined that the range extender has not yet reached the target operating point, and the detection can be continued until the determined operating point is reached.

In addition, no adjustment is made if an absolute value of the actual generation power of the generator is less than a preset threshold (the actual generation power is too small and there is no need to adjust it), or if the range extender is not operating in a power-generating state (there is no need to adjust it).

FIG. 2 is a block diagram of an apparatus for controlling a generation power of a range extender provided by an embodiment of the disclosure. As illustrated in FIG. 2, the apparatus 200 includes: a calculating module 201, a determining module 202, and an adjusting module 203.

The calculating module 201 is configured to calculate an actual generation power of the range extender according to detected currents and voltages of a power-generating device and a power-consuming device.

The determining module 202 is configured to determine an offset between the actual generation power and a demand generation power of the range extender.

The adjusting module 203 is configured to adjust an operating point of the range extender according to the offset, to make the offset within a preset range.

In some embodiments, the power-generating device includes the range extender, the range extender includes a generator, and the calculating module 201 is configured to: detect a bus voltage and a bus current of the generator, and calculate an actual generation power of the generator according to the bus voltage and the bus current of the generator.

In some embodiments, the power-consuming device includes a driving motor, a power battery is either the power-generating device or the power-consuming device, and the calculating module 201 is configured to: detect a bus voltage and a bus current of the driving motor, and calculate an actual power of the driving motor according to the bus voltage and the bus current of the driving motor; detect a bus voltage and a bus current of the power battery, and calculate an actual power of the power battery according to the bus voltage and the bus current of the power battery; and determine the actual generation power of the range extender according to the actual power of the driving motor and the actual power of the power battery.

In some embodiments, the adjusting module 203 is configured to: in response to the offset being positive, decrease a target rotational speed of the generator and/or a target torque of an engine; and in response to the offset being negative, increase the target rotational speed of the generator and/or the target torque of the engine, to make the offset within the preset range.

In some embodiments, the apparatus 200 further includes a control module.

The control module is configured to: determine the demand generation power of the range extender; determine a target operating point of the range extender according to the demand generation power; and control the range extender to reach the determined operating point.

In some embodiments, the control module is configured to: determine a generation power of the range extender corresponding to a current opening degree of an accelerator pedal and a current vehicle speed in a preset first correspondence as a basic generation power, in which the first correspondence is a relation between opening degrees of the accelerator pedal, vehicle speeds, and generation powers of the range extender; and obtain the demand generation power of the range extender by adjusting the basic generation power according to a demand power for whole-vehicle consumption and a SOC of a power battery.

In some embodiments, the control module is configured to:
in response to the demand power for whole-vehicle consumption being greater than a preset power threshold, obtain an intermediate power by adding a preset first increment to the basic generation power; and
in response to the SOC of the power battery being less than a preset SOC threshold, obtain the demand generation power of the range extender by adding a preset second increment to the intermediate power.

In some embodiments, the control module is configured to:
determine a rotational speed of the engine corresponding to a current vehicle speed and the demand generation power in a preset second correspondence as a target rotational speed of the engine, in which the second correspondence is a relation between vehicle speeds, generation powers of the range extender, and rotational speeds of the engine; and
calculate a target torque of the engine according to the target rotational speed of the engine and the demand generation power.

In some embodiments, the control module is configured to:
determine a target rotational speed of the generator according to the target rotational speed of the engine;
control the generator to operate according to the target rotational speed of the generator and control the engine to operate according to the target torque of the engine; and
in response to an absolute value of a difference between an actual rotational speed of the generator and the target rotational speed of the generator being less than a preset rotational speed threshold, and an absolute value of a difference between an actual torque of the engine and the target torque of the engine being less than a preset torque threshold, determine that the range extender reaches the target operating point.

With respect to the apparatus in the embodiment of the disclosure, the specific manner in which each module performs an operation has been described in detail in the embodiments relating to the method, and will not be described in detail herein.

Through the above technical solutions, the actual generation power of the range extender is calculated according to the detected currents and voltages of the power-generating device and the power-consuming device. The operating point of the range extender is adjusted, so that the offset between the actual generation power and the demand generation power of the range extender is within the preset range. Since the actual generation power of the range extender is not calculated using the torque of the engine, overcharging or over-discharging of the power battery due to inaccurate torque of the engine can be avoided.

The disclosure also provides a non-transitory computer-readable storage medium having a computer program stored thereon. When the computer program is executed by a processor, the steps of the method provided by the disclosure are implemented.

The disclosure also provides a vehicle, including a memory and a processor. The memory has a computer program stored thereon. The processor is configured to execute the computer program in the memory, to realize the steps of the above method provided by the disclosure.

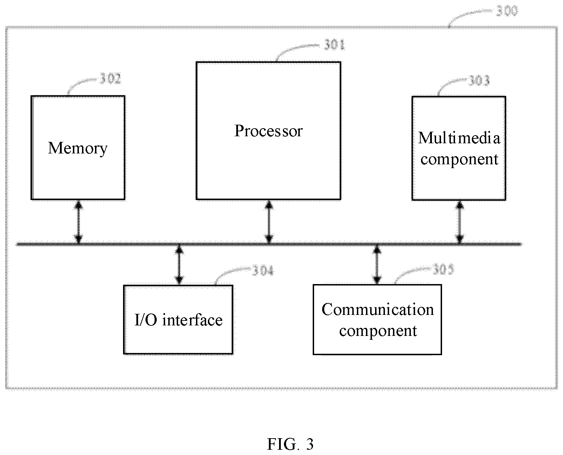

FIG. 3 is a block diagram of a vehicle 300 according to an embodiment of the disclosure. As illustrated in FIG. 3, the vehicle 300 includes: a processor 301 and a memory 302. The vehicle 300 may also include one or more of a multimedia component 303, an input/output (I/O) interface 304, and a communication component 305.

The processor 301 is configured to control the overall operation of the vehicle 300 to implement all or some of the steps in the method for controlling a generation power of a range extender described above. The memory 302 is configured to store various types of data to support the operation of the vehicle 300. Examples of such data include instructions for any applications or methods operated on the vehicle 300, and application-related data, such as contact data, transmitted and received messages, pictures, videos, and audios, etc. The memory 302 may be implemented using any type of volatile or nonvolatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk. The multimedia component 303 may include a screen and an audio component. The screen may, for example, be a touch screen. The audio component is configured to output and/or input audio signals. For example, the audio component may include a microphone, which is configured to receive external audio signals. The received audio signals may be further stored in the memory 302 or transmitted via the communication component 305. The audio component further includes at least one speaker for outputting the audio signals. The I/O interface 304 provides an interface between the processor 301 and other interface modules. The other interface modules may be keyboards, mice, buttons and the like. The buttons may be virtual buttons or physical buttons. The communication component 305 is used for wired or wireless communication between the vehicle 300 and other devices. The wireless communication may be performed by using Wi-Fi, Bluetooth, Near Field Communication (NFC), 2G, 3G, 4G, NB-IOT, eMTC, 5G, or a combination of one or more of them, which is not limited herein. Therefore, the communication component 305 may include: a Wi-Fi module, a Bluetooth module, and an NFC module, etc.

In an exemplary embodiment, the vehicle 300 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In another exemplary embodiment, a computer-readable storage medium including a program instruction is provided. When the program instruction is executed by a processor, the steps of the above-described method for controlling a generation power of a range extender is implemented. For example, the computer-readable storage medium may be the above-described memory 302 including the program instruction. The above-described program instruction may be executed by the processor 301 of the vehicle 300 to perform the above-described method for controlling a generation power of a range extender.

In another exemplary embodiment, a computer program product including a computer program executable by a programmable device is provided. The computer program has a code portion that, when executed by the programmable device, performs the above-described method for controlling a generation power of a range extender.

The preferable embodiments of the disclosure are described in detail above in combination with the accompanying drawings. However, the disclosure is not limited to the specific details in the above embodiments, and a variety of simple variations of the technical solutions of the disclosure may be carried out within a scope of the technical conception of the disclosure, and all these simple variations fall within the scope of protection of the disclosure.

It is noted that each specific technical feature described in the above specific embodiments can be combined in any suitable manner without contradiction. In order to avoid unnecessary repetition, the disclosure does not separately describe the various possible combinations.

In addition, the implementations of the disclosure can be combined arbitrarily, as long as they do not violate the ideas of the disclosure, they should likewise be regarded as the contents disclosed in the disclosure.

## Claims

1. A method for controlling a generation power of a range extender, comprising:
calculating an actual generation power of the range extender according to detected currents and voltages of a power-generating device and a power-consuming device;
determining an offset between the actual generation power and a demand generation power of the range extender; and
adjusting an operating point of the range extender according to the offset, to make the offset within a preset range.

2. The method of claim 1, wherein the power-generating device comprises the range extender, the range extender comprises a generator, and calculating the actual generation power of the range extender according to the detected currents and voltages of the power-generating device and the power-consuming device comprises:
detecting a bus voltage and a bus current of the generator, and calculating an actual generation power of the generator according to the bus voltage and the bus current of the generator.

3. The method of claim 1, wherein the power-consuming device comprises a driving motor, a power battery is either the power-generating device or the power-consuming device, and calculating the actual generation power of the range extender according to the detected currents and voltages of the power-generating device and the power-consuming device comprises:
detecting a bus voltage and a bus current of the driving motor, and calculating an actual power of the driving motor according to the bus voltage and the bus current of the driving motor;
detecting a bus voltage and a bus current of the power battery, and calculating an actual power of the power battery according to the bus voltage and the bus current of the power battery; and
determining the actual generation power of the range extender according to the actual power of the driving motor and the actual power of the power battery.

4. The method of claim 1, wherein the range extender comprises a generator and an engine, and adjusting the operating point of the range extender according to the offset to make the offset within the preset range comprises:
in response to the offset being positive, decreasing a target rotational speed of the generator and/or a target torque of the engine; and
in response to the offset being negative, increasing the target rotational speed of the generator and/or the target torque of the engine, to make the offset within the preset range.

5. The method of claim 1, wherein before calculating the actual generation power of the range extender according to the detected currents and voltages of the power-generating device and the power-consuming device, the method further comprises:
determining the demand generation power of the range extender;
determining a target operating point of the range extender according to the demand generation power; and
controlling the range extender to reach the target operating point.

6. The method of claim 5, wherein determining the demand generation power of the range extender comprises:
determining a generation power of the range extender corresponding to a current opening degree of an accelerator pedal and a current vehicle speed in a preset first correspondence as a basic generation power, wherein the first correspondence is a relation between opening degrees of the accelerator pedal, vehicle speeds, and generation powers of the range extender; and
obtaining the demand generation power of the range extender by adjusting the basic generation power according to a demand power for whole-vehicle consumption and a state of charge (SOC) of a power battery.

7. The method of claim 6, wherein obtaining the demand generation power of the range extender by adjusting the basic generation power according to the demand power for the whole-vehicle consumption and the SOC of the power battery comprises:
in response to the demand power for the whole-vehicle consumption being greater than a preset power threshold, obtaining an intermediate power by adding a preset first increment to the basic generation power; and
in response to the SOC of the power battery being less than a preset SOC threshold, obtaining the demand generation power of the range extender by adding a preset second increment to the intermediate power.

8. The method of claim 5, wherein the range extender comprises a generator and an engine, and determining the target operating point of the range extender according to the demand generation power comprises:
determining a rotational speed of the engine corresponding to a current vehicle speed and the demand generation power in a preset second correspondence as a target rotational speed of the engine, wherein the second correspondence is a relation between vehicle speeds, generation powers of the range extender, and rotational speeds of the engine; and
calculating a target torque of the engine according to the target rotational speed of the engine and the demand generation power.

9. The method of claim 8, wherein controlling the range extender to reach the target operating point comprises:
determining a target rotational speed of the generator according to the target rotational speed of the engine;
controlling the generator to operate according to the target rotational speed of the generator, and controlling the engine to operate according to the target torque of the engine; and
in response to an absolute value of a difference between an actual rotational speed of the generator and the target rotational speed of the generator being less than a preset rotational speed threshold, and an absolute value of a difference between an actual torque of the engine and the target torque of the engine being less than a preset torque threshold, determining that the range extender reaches the target operating point.

10. An apparatus for controlling a generation power of a range extender, comprising:
a calculating module, configured to calculate an actual generation power of the range extender according to detected currents and voltages of a power-generating device and a power-consuming device;
a determining module, configured to determine an offset between the actual generation power and a demand generation power of the range extender; and
an adjusting module, configured to adjust an operating point of the range extender according to the offset, to make the offset within a preset range.

11. The apparatus of claim 10, further comprising a controlling module, configured to:
determine the demand generation power of the range extender;
determine a target operating point of the range extender according to the demand generation power; and
control the range extender to reach the target operating point.

12. A non-transitory computer-readable storage medium having a computer program stored thereon that, when executed by a processor, causes the processor to perform the method of any one of claims 1-9.

13. A vehicle, comprising:
a memory having a computer program stored thereon; and
a processor for executing the computer program in the memory to perform the method of any one of claims 1-9.

14. A computer program product comprising a computer program, wherein when the computer program is executed by a processor, the method of any one of claims 1-9 are implemented.
